**Europäisches Patentamt**

**European Patent Office**

**Office européen des brevets**

(11) Veröffentlichungsnummer : **0 085 871**
**B1**

(12) EUROPÄISCHE PATENTSCHRIFT

(45) Veröffentlichungstag der Patentschrift :
07.08.85

(51) Int. Cl.⁴ : **H 02 P   5/40**

(21) Anmeldenummer : 83100537.6

(22) Anmeldetag : 21.01.83

(54) Verfahren zur Erhöhung der Maximaldrehzahl einer Synchronmaschine bei vorgegebener Erregerfeldstärke und Klemmenspannung und Schaltungsanordnung zur Durchführung des Verfahrens.

(30) Priorität : 05.02.82 DE 3203911

(43) Veröffentlichungstag der Anmeldung :
17.08.83 Patentblatt 83/33

(45) Bekanntmachung des Hinweises auf die Patenterteilung : 07.08.85 Patentblatt 85/32

(84) Benannte Vertragsstaaten :
DE FR GB IT

(56) Entgegenhaltungen :
EP-A- 0 034 808
DE-A- 2 629 927
DE-A- 2 734 430
DE-A- 2 856 538
DE-A- 2 915 987

(73) Patentinhaber : Siemens Aktiengesellschaft
Berlin und München Wittelsbacherplatz 2
D-8000 München 2 (DE)

(72) Erfinder : Schwesig, Günter
Drosselweg 15
D-8520 Erlangen (DE)
Erfinder : Voss, Erich, Dr.
Hedwig-Fichtel-Strasse 18
D-8740 Bad Neustadt (DE)
Erfinder : Vogt, Hartmut, Dipl.-Ing.
Am Europakanal 2
D-8520 Erlangen (DE)
Erfinder : Zander, Hans-Hermann, Dipl.-Ing.
Würzburger Ring 86
D-8520 Erlangen (DE)

## Beschreibung

Die Erfindung betrifft ein Verfahren zur Erhöhung der Maximaldrehzahl einer Synchronmaschine mit konstanter Erregerfeldstärke mit einem vorgeschaltetern Stromrichter, dem ein Wirkstrom-Sollwert vorgegeben wird, dessen Phasenlage in Abhängigkeit von der Lage des Rotors der Synchronmaschine geregelt wird und dessen Amplitude in Abhängigkeit von einem Drehzahl-Sollwert geregelt wird.

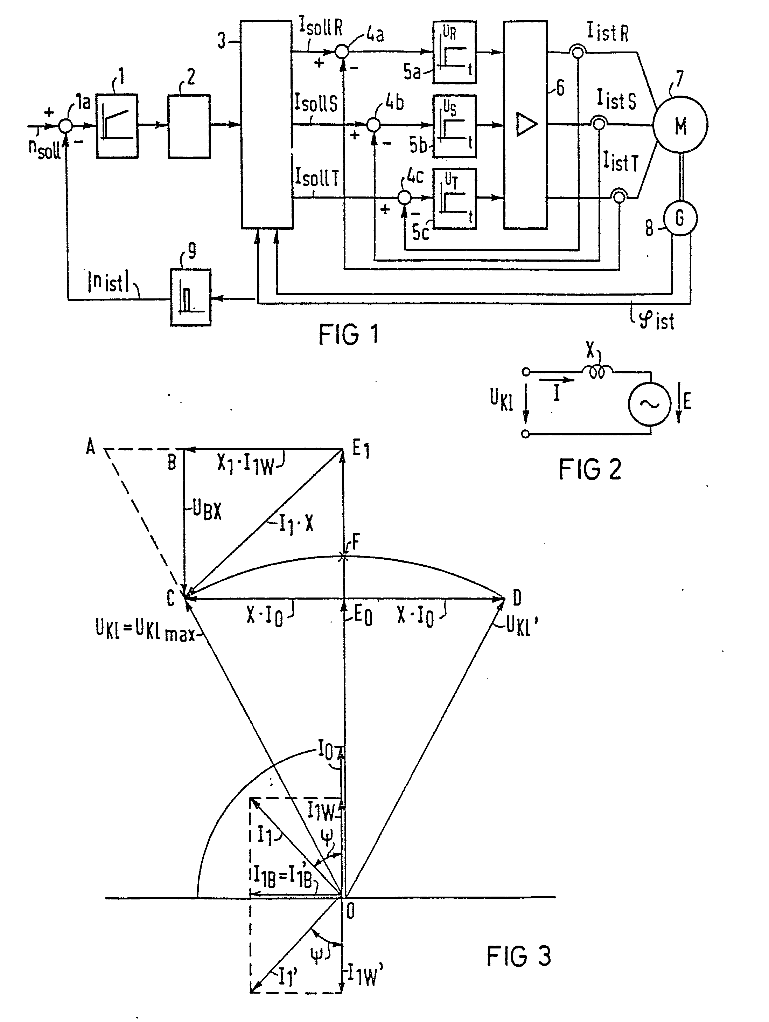

Stromrichter der gennanten Art zur Speisung einer Synchronmaschine sind im Handel erhältlich. Ein Beispiel einer solchen, auch als selbstgesteuerte Synchronmaschine bezeichneten Anordnung ist in Figur 1 dargestellt. Ein Stromrichter 6 speist einen Synchronmotor 7, auf dessen Welle ein Rotor-Lagegeber 8 angeordnet ist. Aus dem Rotor-Lagesignal $\varphi_{ist}$ wird durch einen Umformer 9, beispielsweise einen Differenzierer ein Drehzahl-Istwert $n_{ist}$ gebildet. Dieser Drehzahl-Istwert $n_{ist}$ wird mit einer Subtrahierschaltung 1a mit einem Drehzahl Sollwert $n_{soll}$ verglichen. Die Differenz zwischen Soll- und Istwert wird einem Drehzahlregler 1 zugeführt, der PI-Verhalten aufweist. Dem Drehzahlregler 1 ist ein Koeffizientenmultiplizierer 2 nachgeschaltet. Am Ausgang des Koeffizientenmultiplizierers 2 steht der Sollwert für die Amplitude des Wirkstroms $I_{Wsoll}$ an. Dieser Sollwert wird einem Vektordreher 3 zugeführt. An den Steuereingängen des Vektordrehers 3 steht das Ausgangssignal des Rotor-Lagegebers 8 an. Damit werden drei rotierende Vektoren für die Sollströme $\vec{I}_{sollR}$, $\vec{I}_{sollS}$, $\vec{I}_{sollT}$ in den einzelnen Phasen der Synchronmaschine gebildet. Der Betrag dieser Vektoren stimmt mit dem Wirkstrom-Sollwert $I_{Wsoll}$ überein. Die Phasenlage der Vektoren wird durch das Rotor-Lagesignal $\varphi$ ist so gesteuert, daß sie in Phase mit den entsprechenden Polradspannungen der Synchronmaschine liegen, d. h. daß die Sollströme $\vec{I}_{sollR}$, $\vec{I}_{sollS}$, $\vec{I}_{soll}T$ synchron zu den entsprechenden Polradspannungen sind. Ein Vektordreher der hier benötigten Art ist beispielsweise aus dem Artikel « Das Prinzip der Feldorientierung, die Grundlage für die Transvektor-Regelung von Drehfeldmaschinen » in Siemens-Zeitschrift 45, Oktober 1971, Helft 10, Seiten 757 bis 760 bekannt.

Der so erhaltene dreiphasige Sollwert $\vec{I}_{sollR}$ bis $\vec{I}_{sollT}$ wird in den Subtrahierstufen 4a bis 4c mit den entsprechenden Istwerten $I_{istR}$ bis $I_{istT}$ verglichen. Die Stromistwert $I_{ist}$ werden mit Stromwandlern, die in die Anschlußleitung des Synchronmotors 7 geschaltet sind, gewonnen. Zur Regelung der Maschinenströme wird die Ausgangsspannung des Stromrichters 6 als Stellgröße verwendet. Dazu werden die Subtraktionsglieder 4a bis 4c über Stromregler 5a bis 5c, deren Ausgänge die Spannungen abbilden, die nötig sind, um die Strom-Soll-Istdifferenz zu Null zu machen, den Steuereingängen des Stromrichters 6 zugeführt. Die Ausgangsspannung des Stromrichters 6 wird in bekannter Weise beispielsweise durch Pulsbreitenmodulation verändert.

In der Praxis wird die Vektordrehung sowie die Stromregelung meist nur für zwei Phasen ausgeführt, da in symmetrischen Drehstromsystemen die Vektorsumme der drei sinusförmigen Phasenströme stets Null ist. Der Stromwert für die dritte Phase kann daher durch Summenbildung der beiden anderen Stromwerte gewonnen werden.

Mit der beschriebenen Regeleinrichtung werden also der Synchronmaschine sinusförmige Ströme eingeprägt, die in Phase zur jeweiligen induzierten Polradspannung liegen und somit ein maximales Drehmoment erzeugen.

Figur 2 zeigt das für stationäre Vorgänge vereinfachte einphasige Ersatzschaltbild einer Synchronmaschine unter Vernachlässigung der ohmschen Widerstände in der Ständerwicklung und Zusammenfassung der Streureaktanz und der synchronen Reaktanz zur Reaktanz X. Wenn der Strom I in Phase mit der Polradspannung E ist, was durch die dargestellte Regelung sichergestellt wird, so steht die an der Reaktanz X abfallende Spannung im Vektordiagramm senkrecht auf E und der Betrag der an der Synchronmaschine anstehenden Klemmenspannung $U_{Kl}$ ergibt sich dann zu :

$$U_{Kl} = \sqrt{E^2 + (I\ X)^2}$$

Die Polradspannung E ist proportional zur Istdrehzahl $n_{ist}$ der Synchronmaschine sowie zur Erregerfeldstärke. Bei gegebenem Strom I und konstanter Erregerfeldstärke ist die Maximaldrehzahl der Synchronmaschine dann erreicht, wenn die Klemmenspannung $U_{Kl}$ gleich der höchstmöglichen Ausgangsspannung des Stromrichters 6 wird. Um bei gegebener Grenze der Wechselrichter-Ausgangsspannung die Maximaldrehzahl zu erhöhen, ist es bekannt, die Erregerfeldstärke zu verringern. Dies setzt jedoch eine eigene Steuereinrichtung für den Erregerstrom voraus und ist z. B. bei permanenterregten Synchronmaschinen unmöglich.

Aufgabe der Erfindung ist es daher, ein Verfahren und eine Schaltungsanordnung zur Durchführung des Verfahrens anzugeben, wobei die Maximaldrehzahl der Synchronmaschine bei vorgegebener Erregerfeldstärke und Klemmenspannung erhöht wird.

Diese Aufgabe wird erfindungsgemäß dadurch gelöst, daß bei Ist-Drehzahlen $|n_{ist}| > n_0$ die Amplitude des Wirkstrom-Sollwerts auf einen zum Faktor $|n_{ist}|/n_0$ umgekehrt proportionalen Wert begrenzt wird und zum Wirkstrom-Sollwert ein gegenüber diesem um plus 90° verschobener Blindstrom-Sollwert addiert wird, dessen Amplitude proportional zu $(1 - n_0/n_{ist})$ ist, wobei $n_0$ ein vorgegebener Drehzahlwert ist, bei dem die Summe der Polradspannung E der Synchronmaschine und des Spannungsabfalls in der Ständerwicklung maximal gleich der größtmöglichen Ausgangsspannung des Stromrichters ist.

Durch die Addition des Blindstrom-Sollwerts wird an der Reaktanz X ein Spannungsabfall erzeugt, der der Polradspannung E entgegen gerichtet ist. Dadurch kann die Polradspannung E entgegen gerichtet ist. Dadurch kann die Polradspannung um diesen Spannungsabfall größer als die Ausgangsspannung des Stromrichters werden. Es ist also eine Steigerung der Maximaldrehzahl der Synchronmaschine möglich. Um mit der Drehzahlerhöhung keinen erhöhten Spannungsabfall an der Reaktanz X durch den Wirkstrom zu bekommen, wird dieser umgekehrt proportional zur Drehzahl verringert.

Vorteilhafterweise ist der Drehzahlwert $n_0$ proportional zur Netzspannung des den Stromrichter speisenden Versorgungsnetzes. Der Drehzahlwert $n_0$, bei dem die Verringerung des Wirkstrom-Sollwerts und Addition des Blindstrom-Sollwerts einsetzt, wird damit an die maximale Ausgangsspannung des Stromrichters angepaßt.

Bei einer Schaltungsanordnung zur Durchführung des Verfahrens mit einem Drehzahlregler, dem die Abweichung der Istdrehzahl der Synchronmaschine von der Solldrehzahl zugeführt ist und dem über einen ersten Koeffizientenmultiplizierer ein erster Vektordreher nachgeschaltet ist, dessen Steuereingänge mit einem Rotor-Lagegeber verbunden sind, wobei am Ausgang des ersten Vektordrehers der Wirkstrom-Sollwert ansteht, ist dem Drehzahlregler vorteilhafterweise ein erster Begrenzer nachgeschaltet, der das Ausgangssignal des Drehzahlreglers auf einen zum Faktor $|n_{ist}|/n_0$ umgekehrt proportionalen Wert begrenzt und der Drehzahl-Istwert $|n_{ist}|$ einem ersten Kennliniengeber zugeführt ist, der daraus eine Größe $I_B$* bildet, die bei Drehzahl-Istwerten $|n_{ist}| < n_0$ gleich Null und bei Drehzahl- Istwerten $|n_{ist}| > n_0$ proportional zu $(1 - n_0/n_{ist})$ ist, wobei der Ausgang des ersten Kennliniengebers über einen zweiten Koeffizientenmultiplizierer mit einem zweiten Vektordreher verbunden ist, dessen Steuereingänge mit dem Rotor-Lagegeber verbunden sind und dessen Ausgangssignal gegenüber dem Rotor-Lagesignal um 90° gedreht ist, wobei die zugeordneten Ausgänge der beiden Vektordreher mit einem Addierglied verbunden sind, an dessen Ausgang der Strom-Sollwert ansteht.

Das erfindungsgemäße Verfahren kann damit mit wenigen Elementen realisiert werden.

Zweckmäßigerweise ist der Steuereingang des ersten Begrenzers mit dem Ausgang eines zweiten Kennliniengebers verbunden, an dessen Eingang der Betrag des Drehzahl-Istwerts ansteht, wobei der zweite Kennliniengeber bei Drehzahl-Istwerten $|n_{ist}| < n_0$ ein konstantes Ausgangssignal und bei Drehzahl-Istwerten $|n_{ist}| > n_0$ ein zum Faktor $|n_{ist}|/n_0$ umgekehrt proportionales Ausgangssignal liefert. Der Begrenzer wird also durch den zweiten Kennliniengeber so gesteuert, daß bei Drehzahl-Istwerten $|n_{ist}| > n_0$ der Wirkstrom-Sollwert begrenzt wird.

Der zweite Kennliniengeber besteht vorteilhafterweise aus einem ersten Summierverstärker, an dessen invertierendem Eingang der Betrag des Drehzahl-Istwerts ansteht und an dessen nichtinvertie- rendem Eingang der Drehzahlwert $n_0$ ansteht, wobei der erste Summierverstärker durch Rückführdioden als Idealgleichrichter geschaltet ist, wobei der Ausgang des ersten Summierverstärkers über einen Widerstand mit einem Eingang eines zweiten Summierverstärkers verbunden ist und wobei an demselben Eingang des zweiten Summierverstärkers der Maximalwert für den Wirkstrom-Sollwert ansteht. Bei einem derartigen Kennliniengeber wird die Funktion 1/n durch eine linear abfallende Funktion angenähert. Diese Annäherung ist jedoch für den in Frage kommenden Drehzahlbereich ausreichend.

Der Begrenzer kann zwei entgegengesetzt gepolte, miteinander verbundene Dioden enthalten, deren Verbindungspunkt über einen Widerstand mit dem Ausgang des Drehzahlreglers verbunden ist und deren zweiter Anschluß direkt bzw. über einen Inverter mit dem Ausgang des zweiten Kennliniengebers verbunden ist. Der Begrenzer kann also mit zwei Dioden ausgeführt werden.

Der erste Kennliniengeber kann einen Summierverstärker enthalten, an dessen nichtinvertierendem Eingang der Betrag des Drehzahl-Istwerts und an dessen invertierendem Eingang der Drehzahlwert $n_0$ ansteht, wobei der Summierverstärker durch Rückführdioden als Idealgleichrichter geschaltet ist und wobei dem Summierverstärker ein Widerstand nachgeschaltet ist, der über eine erste Diode mit dem Betrag des Drehzahl-Istwerts und über einen Impedanzwandler mit dem Ausgang des Kennliniengebers verbunden ist. Ein derartig aufgebauter Kennliniengeber liefert eine Näherungsfunktion für den Faktor $(1 - n_0/|n_{ist}|)$, mit der die gewünschte Funktion jedoch ausreichend genau angenähert werden kann.

Das erfindungsgemäße Verfahren sowie eine Schaltungsanordnung zur Durchführung des Verfahrens wird nachfolgend beispielhaft anhand der Figuren 2 bis 8 näher erläutert.

Zur Erläuterung des Verfahrens ist in Figur 3 ein Vektordiagramm des Synchronmotors dargestellt. Dabei wird zunächst davon ausgegangen, daß die Synchronmaschine zunächst noch im Normalbetrieb ist, also das erfindungsgemäße Verfahren noch nicht eingesetzt hat. Die Synchronmaschine dreht sich mit der Drehzahl $n_0$ und es fließt ein Strom $\vec{I_0}$ in den Ständerwicklungen. Der sich mit der Drehzahl $n_0$ drehende Rotor induziert in der Ständerwicklung die Polradspannung $\vec{E_0}$. Aufgrund der bereits erläuterten Regelung befinden sich der Ständerstrom $\vec{I_0}$ und die Polradspannung $\vec{E_0}$ in Phase. Der Strom $\vec{I_0}$ wird daher im folgenden auch als Wirkstrom bezeichnet. Der Wirkstrom $\vec{I_0}$ erzeugt an der Reaktanz X einen Spannungsabfall $X \cdot \vec{I_0}$, der im Vektordiagramm senkrecht zur Polradspannung $\vec{E_0}$ liegt. An den Klemmen des Motors steht damit eine Klemmenspannung $\vec{U_{Kl}}$ an, die sich durch Addition der Vekforen $\vec{E_0}$ und $X \cdot \vec{I_0}$ ergibt. Diese Klemmenspannung $\vec{U_{Kl}}$ weist folgenden Betrag auf :

$$|U_{Kl}| = \sqrt{E_0^2 + (|I_0|X)^2}$$

Wenn $|U_{Kl}|$ die maximal erreichbare Ausgangsspannung des Stromrichters 6 ist, d. h. $|U_{Kl}| = U_{Kl}^-$·

max, so ist die der Polradspannung $\vec{E}_0$ zugeordnete Drehzahl $n_0$ gleich der maximal erreichbaren Drehzahl $n_0$. Wie sich aus dem Vektordiagramm nach Figur 3 ergibt, ist die erreichbare Drehzahl $n_0$ proportional der maximal möglichen Klemmenspannung $U_{Klmax}$. Sie ist außerdem proportional der Erregerfeldstärke der Synchronmaschine. Beide Größen lassen sich jedoch, wie vorausgesetzt, nicht ändern. Ferner besteht eine gewisse Abhängigkeit der erreichbaren Drehzahl $n_0$ von der Größe des Wirkstroms $\vec{I}_0$. Wenn beispielsweise der Statorstrom $\vec{I}_0 = 0$ ist, so entfällt der Spannungsabfall an der Reaktanz X und die Polradspannung $\vec{E}_0$ kann gleich der maximalen Klemmenspannung $\vec{U}_{Klmax}$ werden, d. h. bis auf den Punkt F in Figuren 3 wandern. Dies ist mit einer entsprechenden Drehzahlerhöhung verbunden.

Im folgenden soll jedoch die Abhängigkeit der maximalen Drehzahl vom Wirkstrom $\vec{I}_0$ vernachlässigt werden. Als Drehzahlwert $n_0$ wird vielmehr ein Festwert gewählt, der beispielsweise dem beim erfindungsgemäßen Verfahren maximal zu erwartenden Ständerstrom $\vec{I}_0$ zugeordnet ist. Damit setzt zwar die Wirkstrombegrenzung sowie die Blindstromaddition bei kleineren Drehzahlen etwas früher ein als an sich erforderlich, dies wirkt sich jedoch nur geringfügig auf die Dynamik der Synchronmaschine aus.

Wenn man die Drehzahl n über $n_0$ hinaus erhöht, so steigt die Polradspannung $\vec{E}$ beispielsweise auf den in Figur 3 dargestellten Wert $\vec{E}_1$. Proportional mit der Drehzahl steigt auch der Spannungsabfall $\vec{XI}_0$ an der Reaktanz X. Die Klemmenspannung $\vec{U}_{Kl}$ müßte dazu ohne zusätzliche Maßnahmen bis zu dem in Figur 3 mit A bezeichneten Punkt ansteigen, was jedoch aus den dargelegten Gründen nicht möglich ist. Um auch bei der dargestellten Polradspannung $\vec{E}_1$ nur auf die Klemmenspannung $\vec{U}_{Klmax}$ zu kommen, wird zunächst der Wirkstrom auf einen Wert $\vec{I}_{1W}$ reduziert. Dieser ist so gewählt, daß der Spannungsabfall $\vec{I}_{1W}$ trotz der bei der höheren Drehzahl höheren Reaktanz $X_1$ gleich dem Spannungsabfall $\vec{XI}_0$ bei der Drehzahl $n_0$ bleibt. Dazu wird der Wirkstrom $\vec{I}_W$ über der Drehzahl $n_0$ umgekehrt proportional zum Faktor $n/n_0$ begrenzt. Damit gelangt man zum Punkt B im Vektordiagramm. Außerdem wird zum Strom $\vec{I}_{1W}$, der wie der Strom $\vec{I}_0$ in Phase zur Polradspannung $\vec{E}$ liegt und damit ein reiner Wirkstrom ist, ein Blindstrom $\vec{I}_{1B}$ addiert, der der Polradspannung $\vec{E}$ um 90° voreilt. Dieser Blindstrom $\vec{I}_{1B}$ erzeugt an der Reaktanz X ebenfalls einen Spannungsabfall $\vec{U}_{BX}$, der gegenüber dem Blindstrom $\vec{I}_{1B}$ um 90° und damit gegenüber der Polradspannung $\vec{E}$ um 180° verschoben ist. Der durch den aufaddierten Blindstrom $\vec{I}_{1B}$ erzeugte Spannungsabfall $\vec{U}_{BX}$ ist also der Polradspannung $\vec{E}$ entgegengerichtet. Der Blindstromanteil $\vec{I}_{1B}$ ist so gewählt, daß der dadurch bedingte Spannungsabfall $\vec{U}_{BX}$ gerade die Zunahme der Polradspannung $\Delta\vec{E}$ aufgrund der Drehzahlerhöhung über $n_0$ hinaus kompensiert. Wenn also L die Summe von Streuinduktivität und synchroner Induktivität ist und die Polradspannung $\vec{E}$ gleich p × n ist, so ergibt sich folgender Zusammenhang :

$$U_{BX} = E_1 - E_0 =$$
$$I_B \cdot 2\pi n \cdot L = p(n - n_0)$$
$$I_B = p/2\pi L \, (1 - n_0/n)$$

Der Blindstromanteil $I_B$ muß also proportional zu $1 - n_0/n$ gewählt werden.

Der Wirkstrom $I_W$ muß, wie bereits erläutert, über der Drehzahl $n_0$ umgekehrt proportional zum Wert n begrenzt werden.

Die bisher dargestellten Überlegungen gelten für den Motorbetrieb. Diese lassen sich jedoch analog auch für den im rechten Teil des Diagramms nach Figur 3 dargestellten Generatorbetrieb anwenden, wobei lediglich der Wirkstrom $\vec{I}_{1W}$ ein entgegengesetztes Vorzeichen aufweist, während der Blindstrom $\vec{I}_{1B}$, sein Vorzeichen behält.

Mit dem dargestellten Verfahren gelingt es also, bei vorgegebener Erregerfeldstärke und Versorgungsspannung die Maximaldrehzahl der Synchronmaschine zu erhöhen. Eine Grenze für die Drehzahlerhöhung ist dadurch gegeben, daß mit abnehmendem Wirkstrom natürlich auch das Drehmoment der Synchronmaschine abnimmt. Mit abnehmendem Drehmoment wird damit auch das Beschleunigungsvermögen der Synchronmaschine geringer, so daß diese im höheren Drehzahlbereich eine schlechtere Dynamik aufweist. Diese Einschränkungen stören jedoch nicht bei Antrieben, beispielsweise bei Vorschubantrieben von Werkzeugmaschinen, die in einem sogenannten Eilgang weitgehend unbelastet betrieben werden. Bei Versuchen wurde ohne weiteres eine Erhöhung der Maximaldrehzahl um den Faktor 2 erreicht. Der die Synchronmaschine speisende Stromrichter 6 muß selbstverständlich für die Belastung durch den zusätzlichen Blindstrom ausgelegt sein und die Strombelastbarkeit der Synchronmaschine darf nicht überschritten werden, um eine thermische Überlastung der Synchron.naschine zu vermeiden.

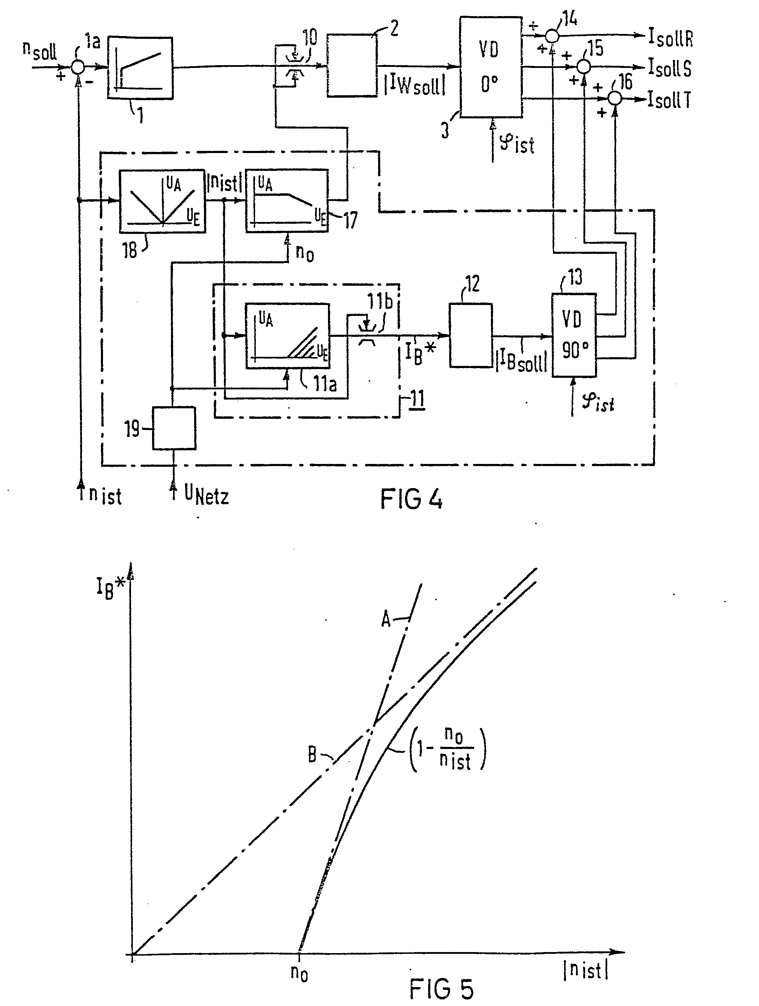

Eine Schaltungsanordnung zur Durchführung des Verfahrens ist in Figur 4 dargestellt. Dabei wird wie bei der bekannten Schaltung nach Figur 1 in einer Subtraktionsschaltung 1a die Differenz zwischen Drehzahl-Sollwert $n_{soll}$ und Drehzahl-Istwert $n_{ist}$ gebildet. Diese Differenz wird über einen Drehzahlregler 1 und einen Koeffizientenmultiplizierer 2 einem Vektordreher 3 zugeführt, der mit dem Ausgangssignal $\varphi_{ist}$ des Rotor-Lagegebers gesteuert wird. Das Ausgangssignal des Vektordrehers 3 liegt in Phase mit dem Lage-Istwert $\varphi_{ist}$, was durch die Bezeichnung 0° im Schaltsymbol des Vektordrehers 3 gekennzeichnet ist. In diesem Zweig liegt der einzige Unterschied zur bekannten Anordnung darin, daß zwischen Drehzahlregler 1 und Koeffizientenmultiplizierer 2 ein Begrenzer 10 eingefügt ist, der entsprechend dem beschriebenen Verfahren das Ausgangssignal des Drehzahlreglers 1 bei Istdrehzahlen

$|n_{ist}| > n_0$ umgekehrt proportional zum Faktor $|n_{ist}|/n_0$ begrenzt. Der Begrenzer 10 wird durch einen Kennliniengeber 17 gesteuert, der das entsprechende Begrenzungssignal liefert. Dazu wird dem Kennliniengeber 17 der Drehzahl-Istwert $n_{ist}$ über einen Betragsbildner 18, der negative Istwerte in positive Istwerte umwandelt, als Eingangsgröße $|n_{ist}|$ zugeführt. Der Einsatzpunkt $n_0$ kann entweder fest vorgegeben werden oder — bei variabler Netzspannung — von dieser abhängig gemacht werden. Da die Drehzahlgrenze der Synchronmaschine ohne Zusatzmaßnahmen proportional zur Netzspannung $U_N$ ist, wird ein Meßwert für die Netzspannung $U_N$ über einen Koeffizientenmultiplizierer 19, an dessen Ausgang der Einsatzpunkt $n_0$ ansteht, einem Parametereingang des Kennliniengebers 17 zugeführt.

Die Schaltung weist einen zweiten Zweig auf, in dem ein Blindstromanteil für den Strom-Sollwert $I_{soll}$ gebildet wird. Dieser zweite Zweig enthält einen Kennliniengeber 11, der über einen Koeffizientenmultiplizierer 12 mit dem Eingang eines zweiten Vektordrehers 13 verbunden ist. Der zweite Vektordreher 13 kann ebenfalls wie in dem genannten Artikel in Siemens-Zeitschrift, Oktober 1971, Heft 10, Seiten 757 bis 760 dargestellt, aufgebaut sein. Das Ausgangssignal des Vektordrehers 13 weist jedoch gegenüber dem Lage-Istwert $\varphi_{ist}$ eine Phasenverschiebung von 90° auf. Dies kann auf einfache Weise dadurch erreicht werden, daß bei der bekannten Schaltung nach Bild 7 der genannten Literaturstelle die Eingänge für sin $\varphi$ und cos $\varphi$ vertauscht werden und der Eingang für cos $\varphi$ mit dem Inverter 13a invertiert wird, da sin $(90° + \varphi) = \cos \varphi$ und cos $(90° + \varphi) = -\sin \varphi$. Die am Ausgang des Vektordrehers 13 anstehenden Blindstrom-Sollwerte für die einzelnen Phasen werden je einem Summierer 14 bis 16 zugeführt, an dessen Eingang jeweils der Wirkstrom-Sollwert für die betreffende Phase ansteht. Am Ausgang der Summierer 14 bis 16 steht jeweils der zusammengesetzte Strom-Sollwert $I_{sollR}$ bis $I_{sollT}$ für die einzelnen Phasen an. Diese werden, wie bei der bekannten Schaltung nach Figur 1, zur Stromregelung verwendet, wobei der Strom-Regelkreis in Figur 4 nicht mehr dargestellt ist.

Dem Kennliniengeber 11 wird als Eingangsgröße ebenfalls der Betrag des Drehzahl-Istwerts $n_{ist}$ zugeführt und als Parameter ebenfalls der Einsatzpunkt $n_0$. Die Kennlinie des Kennliniengebers 11 müßte an sich, wie erläutert, der Funktion $(1 - n_0/n_{ist})$, wie sie in Figur 5 dargestellt ist, entsprechen. In dem hier interessierenden Bereich kann sie jedoch durch zwei Geraden, von denen eine durch den Nullpunkt und die zweite durch den Einsatzpunkt $n_0$ läuft, angenähert werden. Diese Annäherung wird dadurch realisiert, daß in einem Teil 11a des Kennliniengebers 11 zunächst die Gerade A in Abhängigkeit von der Drehzahl $|n_{ist}|$ und vom Einsatzpunkt $n_0$ realisiert wird. Das Ausgangssignal des Kennliniengeberteils 11a wird dann mit einem nachgeschalteten Begrenzer 11b entsprechend der Kennlinie B begrenzt. Damit wird also bis zum Schnittpunkt der beiden Kennlinien A, B, die Kennlinie A und dann die Kennlinie B wirksam.

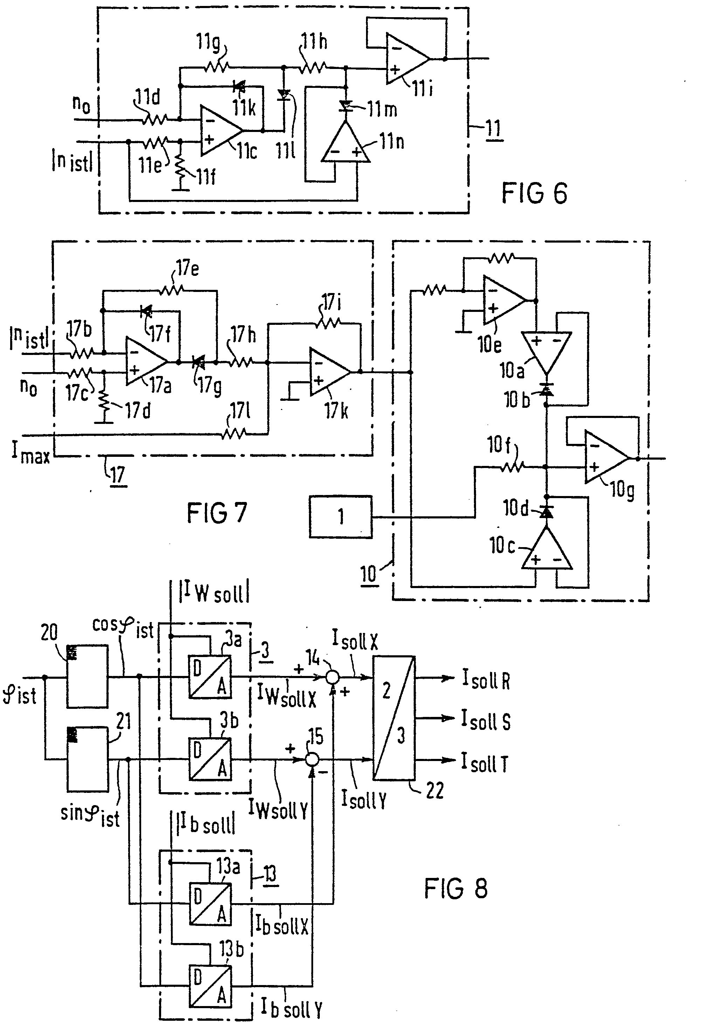

In Figur 6 ist ein Ausführungsbeispiel für den Kennliniengeber 11 dargestellt. Die Werte $n_0$ und $|n_{ist}|$ werden über Widerstände 11d, 11e den Eingängen eines Operationsverstärkers 11c zugeführt. Dabei liegt das Signal $|n_{ist}|$ am nichtinvertierenden Eingang, der zusätzlich über einen Widerstand 11f an Masse liegt. Der Ausgang des Operationsverstärkers 11c ist über eine Diode 11k, deren Anode dem Ausgang des Operationsverstärkers 11c zugewandt ist, mit seinem invertierenden Eingang verbunden. außerdem ist der Ausgang des Operationsverstärkers 11c über eine Diode 11l, einen Widerstand 11h und einen Impedanzwandler 11i mit dem Ausgang des Kennliniengebers 11 verbunden. Der Verbindungspunkt von Diode 11k und Widerstand 11h ist außerdem über einen weiteren Widerstand 11g mit dem invertierenden Eingang des Operationsverstärkers 11c verbunden. Mit diesem Teil des Kennliniengebers 11 wird also ein Ausgangssignal gebildet, das der Differenz $|n_{ist}| - n_0$ proportional ist, d. h. der Kennlinie A entspricht. Mit den Rückführdioden 11k und 11l wird ein Idealgleichrichter gebildet, der den unerwünschten negativen Bereich der Kennlinie abschneidet.

Zur Begrenzung des Ausgangssignals entsprechend der Kennlinie B ist der Verbindungspunkt zwischen Widerstand 11h und Impedanzwandler 11i über eine weitere Diode 11m mit dem Ausgang eines Operationsverstärkers 11n verbunden. Der invertierende Eingang des Operationsverstärkers 11n ist mit dem Verbindungspunkt von Widerstand 11h und Impedanzwandler 11i verbunden und am nichtinvertierenden Eingang des Operationsverstärkers 11n steht der Betrag des Drehzahl-Istwerts $n_{ist}$ an. Mit diesem Operationsverstärker 11n und der Diode 11m wird eine Ideal-Diode ohne Schwellwert realisiert, die leitend wird, sobald die Spannung am Verbindungspunkt von Widerstand 11h und Impedanzwandler 11i größer wird als der Betrag des Drehzahl-Istwerts $|n_{ist}|$. Damit wird also das Ausgangssignal entsprechend der Kennlinie B auf einem zum Drehzahl-Istwert $|n_{ist}|$ proportionalen Wert begrenzt.

Ein Ausführungsbeispiel für den Kennliniengeber 17 und den Begrenzer 10 ist schließlich in Figur 7 dargestellt. Dabei ist der Betrag des Drehzahl-Istwerts $|n_{ist}|$ über einen Widerstand 17b mit dem invertierenden Eingang eines Operationsverstärkers 17a und der Drehzahlwert $n_0$ über einen Widerstand 17c mit dem nichtinvertierenden Eingang des Operationsverstärkers 17a verbunden. Der nichtinvertierende Eingang ist außerdem über einen Widerstand 17d mit dem Bezugspotential der Schaltungsanordnung verbunden. Der Operationsverstärker 17a weist als Rückführung eine Diode 17f zwischen seinem Ausgang und seinem invertierendem Eingang auf, wobei die Anode der Diode 17f mit dem Ausgang des Operationsverstärkers 17a verbunden ist. Dem Ausgang des Operationsverstärkers 17a ist eine Diode 17g nachgeschaltet, deren Kathode mit dem Ausgang des Operationsverstärkers 17a verbunden ist. Die Anode der Diode 17g ist über einen Widerstand 17e mit dem invertierenden Eingang des Operationsverstärkers 17a verbunden. Mit diesem als Ideal-Gleichrichter geschalteten Operationsverstärker 17a wird die Differenz $n_0 - |n_{ist}|$ gebildet, wobei nur negative Werte übertragen werden. Wenn der Drehzahl-

Istwert $|n_{ist}|$ also unter dem Drehzahlwert $n_0$ liegt, ist die Ausgangsspannung des Operationsverstärkers 17a 0. Wenn $|n_{ist}|$ über dem Einsatzpunkt $n_0$ liegt, erhält man eine Kennlinie mit negativer Steigung. Um daraus den gewünschten Kennlinienverlauf zu erzeugen, muß noch ein konstanter Wert $I_{max}$ addiert werden, der dem maximalen Stromsollwert entspricht. Dies erfolgt mit einem weiteren Operationsverstärker 17k, dessen invertierender Eingang über einen Widerstand 17h mit der Diode 11 g und über einen Widerstand 17l mit dem Wert $I_{max}$ verbunden ist. Der Operationsverstärker 17k weist einen Rückführwiderstand 17i zwischen seinem Ausgang und seinem invertierenden Eingang auf. Am Ausgang des Operationsverstärkers 17k steht also eine Spannung an, die gleich $I_{max}$ ist, solange $|n_{ist}| < n_0$ und gleich $I_{max} - (n_{ist} - n_0)$, wenn $|n_{ist}| > n_0$. Mit dem beschriebenen Kennliniengeber 17 wird die an sich gewünschte exakte Funktion $1/|n_{ist}|$ in dem interessierenden Bereich ausreichend angenähert.

Der Ausgang des Kennliniengebers 17 ist mit dem Eingang der Begrenzerschaltung 10 verbunden. Diese enthält zwei Idealdiodenschaltungen, die jeweils aus der Reihenschaltung eines Operationsverstärkers 10a bzw. 10c und einer Diode 10b bzw. 10d bestehen. Der zweite Anschluß der Diode 10b bzw. 10d ist jeweils mit dem invertierenden Eingang des zugeordneten Operationsverstärkers 10a bzw. 10c verbunden. Die dem Ausgang des Operationsverstärkers 10a bzw. 10c abgewandten Anschlüsse der Dioden 10b bzw. 10d sind in einem Verbindungspunkt miteinander verbunden, wobei die beiden Dioden 10b bzw. 10d entgegengesetzt gepolt sind. Das zu begrenzende Ausgangssignal des Drehzahlreglers 1 ist über einen Widerstand 10f dem Verbindungspunkt der beiden Dioden 10b bzw. 10d zugeführt. Das Ausgangssignal des Kennliniengebers 17 ist dem nichtinvertierenden Eingang des Operationsverstärkers 10c direkt und dem nichtinvertierenden Eingang des Operationsverstärkers 10a über einen Inverter 10e zugeführt. Solange das Ausgangssignal des Drehzahlreglers 1 zwischen dem Ausgangssignal des Kennliniengebers 17 und dessen invertiertem Wert liegt, sperren die beiden Idealdiodenschaltungen 10a, 10b bzw. 10c, 10d, so daß das Ausgangssignal des Drehzahlreglers 1 unverändert auf dem Ausgang des Begrenzers 10 übertragen wird. Wenn jedoch das Ausgangssignal des Drehzahlreglers 1 den Bereich verläßt, so wird eine der beiden Dioden 10b bzw. 10d durch den zugeordneten Operationsverstärker 10a bzw. 10c leitend gesteuert und das Ausgangssignal des Begrenzers 10 wird auf das Ausgangssignal des Kennliniengebers 17 begrenzt.

Ein Ausführungsbeispiel für die Vektordreher 3 und 13 ist in Figur 8 dargestellt. Definitionsgemäß sollen die Werte $I_{Wsoll}$ und $I_{Bsoll}$ als Vektoren betrachtet werden, die in X-Richtung liegen und zur Bildung eines Drehfeldes in rotierende Vektoren umzuwandeln sind. Dabei ist der Blindstrom-Sollwert $I_{Bsoll}$ gegenüber dem Wirkstrom-Sollwert $I_{Wsoll}$ um $+ 90°$ zu drehen. Ein um die X-Achse um den Winkel $\varphi$ gedrehter Vektor weist nach den trigonometrischen Gleichungen im kartesischen Koordinatensystem folgende Komponenten auf :

$$I_{sollX} = I_{soll} \cdot \cos \varphi$$

$$I_{sollY} = I_{soll} \cdot \sin \varphi$$

Wenn man einen derartigen Vektor nochmals um 90° dreht, so erhält man :

$$I_{sollX} = I_{soll} \cdot \sin \varphi$$

$$I_{sollY} = I_{soll} \cdot \cos \varphi$$

Zur Vektordrehung muß also der Sinus und der Cosinus des vom Lagegeber 8 digital vorgegebenen Lagemeßsignals $\varphi_{ist}$ gebildet werden. Dies erfolgt z. B. mit je einem Festwert-Speicher 20 bzw. 21, an dessen Adreßeingang der Lage-Istwert $\varphi_{ist}$ ansteht. Damit werden im Festwert-Speicher 20 bzw. 21 die diesem Lage-Istwert $\varphi_{ist}$ zugeordneten Werte von $\cos \varphi_{ist}$ bzw. $\sin \varphi_{ist}$ adressiert und am Ausgang digital abgegeben. Der Ausgang des Festwert-Speichers 20 ist mit einem multiplizierenden Digital-Analog-Wandler 3a und der Ausgang des Festwert-Speichers 21 ist mit einem multiplizierenden Digital-Analog-Wandler 3b verbunden. Am Multiplikationseingang der beiden Digital-Analog-Wandler 3a und 3b steht jeweils der analoge Wirkstrom-Sollwert $I_{Wsoll}$ an. Damit wird also mit dem Digital-Analog-Wandler 3a das Produkt $I_{Wsoll} \cos \varphi_{ist}$ und mit dem Digital-Analog-Wandler 3b das Produkt $I_{Wsoll} \sin \varphi_{ist}$ gebildet. Am Ausgang des Digital-Analog-Wandlers 3a steht damit die X-Komponente und am Ausgang des Digital-Analog-Wandlers 3b die Y-Komponente des gedrehten Wirkstrom-Vektors $\vec{I}_{Wsoll}$ an.

Zur Drehung des Blindstrom-Vektors $\vec{I}_{Bsoll}$ ist der Ausgang des Festwert-Speichers 20 mit dem Eingang eines multiplizierenden Digital-Analog-Wandlers 13b und der Ausgang des Festwert-Speichers 21 mit dem Eingang eines multiplizierenden Digital-Analog-Wandlers 13a des zweiten Vektordrehers 13 verbunden. An den Multiplikationseingängen der Digital-Analog-Wandler 13a und 13b steht jeweils der analoge Wert $I_{Bsoll}$ an. Damit wird also mit dem Digital-Analog-Wandler 13a das Produkt $I_{Bsoll} \sin \varphi_{ist}$, also die X-Komponente des gedrehten Blindstrom-Vektors $\vec{I}_{BsollX}$ gebildet. Mit dem Digital-Analog-Wandler 13b wird das Produkt $I_{Bsoll} \cos \varphi_{ist}$, also die negative Y-Komponente des gedrehten Blindstrom-Vektors $\vec{I}_{BsollY}$ gebildet.

Die X- und Y-Komponenten des Wirkstrom-Vektors $I_{WsollX}$ bzw. $I_{WsollY}$ und des Blindstrom-Vektors $I_{BsollX}$ bzw. $I_{BsollY}$ werden jeweils mit den Summierern 14 bzw. 15 addiert, wobei die Komponente

$- I_{BsollY}$ einem Subtrahiereingang des Summierers 15 zugeführt ist. Am Ausgang des Summierers 14 steht die X-Komponente des gesamten Strom-Sollwerts $I_{sollX}$ und am Ausgang des Summierers 15 dessen Y-Komponente $I_{sollY}$ an.

Diese zweiphasigen Größen müssen nun noch mit einem Koordinatenwandler 22 in ein dreiphasiges System $I_{sollR}$, $I_{sollS}$ und $I_{sollT}$ umgewandelt werden. Ein derartiger Koordinatenwandler ist beispielsweise auf Seite 7 der am 02.09.1981 veröffentlichten europäischen Patentanmeldung 81101184 beschrieben.

**Patentansprüche**

1. Verfahren zur Erhöhung der Maximaldrehzahl einer Synchronmaschine mit konstanter Erregerfeldstärke mit einem vorgeschalteten Stromrichter, dem ein Wirkstrom-Sollwert vorgegeben wird, dessen Phasenlage in Abhängigkeit von der Lage des Rotors der Synchronmaschine geregelt wird und dessen Amplitude in Abhängigkeit von einem Drehzahl-Sollwert geregelt wird, dadurch gekennzeichnet, daß bei Ist-Drehzahlen $|n_{ist}| > n_0$ die Amplitude ($I_{Wsoll}$) des Wirkstrom-Sollwerts ($\vec{I}_{Wsoll}$) auf einen zum Faktor $|n_{ist}|/n_0$ umgekehrt proportionalen Wert begrenzt wird und zum Wirkstrom-Sollwert ($\vec{I}_{Wsoll}$) ein gegenüber diesem um $+90°$ verschobener Blindstrom-Sollwert ($\vec{I}_{Bsoll}$) addiert wird, dessen Amplitude proportional zu $(1 - n_0/|n_{ist}|)$ ist, wobei $n_0$ ein vorgegebener Drehzahlwert ist, bei dem die Summe der Polradspannung (E) der Synchronmaschine und des Spannungsabfalls in der Ständerwicklung maximal gleich der größmöglichen Ausgangsspannung ($U_{Klmax}$) des Stromrichters (6) ist.

2. Verfahren nach Anspruch 1, dadurch gekennzeichnet, daß der Drehzahlwert $n_0$ proportional zur Netzspannung ($U_n$) des den Stromrichter (6) speisenden Versorgungsnetzes ist.

3. Schaltungsanordnung zur Durchführung eines Verfahrens nach Anspruch 1 oder 2, mit einem Drehzahlregler (1), dem die Abweichung der Ist-Drehzahl der Synchronmaschine (7) von der Solldrehzahl zugeführt ist und den über einen ersten Koeffizientenmultiplizierer (2) ein erster Vektordreher (3) nachgeschaltet ist, dessen Steuereingänge mit einem Rotor-Lagegeber (8) verbunden sind, wobei am Ausgang des ersten Vektordrehers der Wirkstrom-Sollwert ansteht, dadurch gekennzeichnet, daß dem Drehzahlregler (1) ein erster Begrenzer (10) nachgeschaltet ist, der das Ausgangssignal des Drehzahlreglers (1) auf einen zum Faktor $|n_{ist}|/n_0$ umgekehrt proportionalen Wert begrenzt und daß der Drehzahl-Istwert $|n_{ist}|$ einem ersten Kennliniengeber (11) zugeführt ist, der daraus eine Größe $I_B^*$ bildet, die bei Drehzahl-Istwerten $|n_{ist}| < n_0$ gleich Null und bei Drehzahl-Istwerten $|n_{ist}| > n_0$ proportional zu $1 - (n_0/|n_{ist}|)$ ist, daß der Ausgang des ersten Kennliniengebers (11) über einen zweiten Koeffizientenmultiplizierer (12) mit einem zweiten Vektordreher (13) verbunden ist, dessen Steuereingänge mit dem Rotor-Lagegeber (8) verbunden sind und dessen Ausgangssignal gegenüber dem Rotor-Lagesignal um $90°$ gedreht ist, und daß die zugeordneten Ausgänge der beiden Vektordreher (3, 13) mit je einem Addierglied (14, 15) verbunden sind, an dessen Ausgang der Stromsollwert ($I_{soll}$) ansteht.

4. Schaltungsanordnung nach Anspruch 3, dadurch gekennzeichnet, daß der Steuereingang des ersten Begrenzers (10) mit dem Ausgang eines zweiten Kennliniengebers (17) verbunden ist, an dessen Eingang der Betrag des Drehzahl-Istwerts $|n_{ist}|$ ansteht, wobei der zweite Kennliniengeber (17) bei Drehzahl-Istwerten $|n_{ist}| < 0$ ein konstantes Ausgangssignal und bei Drehzahl-Istwerten $|n_{ist}| > n_0$ ein zum Faktor $|n_{ist}|/n_0$ umgekehrt proportionales Ausgangssignal abgibt.

5. Schaltungsanordnung nach Anspruch 4, dadurch gekennzeichnet, daß der zweite Kennliniengeber (17) aus einem ersten Summierverstärker (17a) besteht, an dessen invertierendem Eingang der Betrag des Drehzahl-Istwerts $|n_{ist}|$ ansteht und an dessen nichtinvertierendem Eingang der Drehzahlwert $n_0$ ansteht, daß der erste Summierverstärker (17a) durch Rückführdioden (17g, 17f) als Idealgleichrichter geschaltet ist, daß der Ausgang des ersten Summierverstärkers (17a) über einen Widerstand (17h) mit einem Eingang eines zweiten Summierverstärkers (17k) verbunden ist und daß an demselben Eingang des zweiten Summierverstärkers (17k) der Maximalwert für den Wirkstrom-Sollwert ($I_{Wsoll}$) ansteht.

6. Schaltungsanordnung nach Anspruch 4 oder 5, dadurch gekennzeichnet, daß der Begrenzer (10) zwei entgegengesetzt gepolte, miteinander verbundene Dioden (10a, 10b ; 10c, 10d) enthält, deren Verbindungspunkt über einen Widerstand (10f) mit dem Ausgang des Drehzahlreglers (1) verbunden ist und deren zweiter Anschuß direkt bzw. über einen Inverter (10e) mit dem Ausgang des zweiten Kennliniengebers (17) verbunden ist.

7. Schaltungsanordnung nach einem der Ansprüche 3 bis 6, dadurch gekennzeichnet, daß der erste Kennliniengeber einen Summierverstärker (11c) enthält, an dessen nichtinvertierendem Eingang der Betrag des Drehzahl-Istwerts $|n_{ist}|$ und an dessen invertierendem Eingang der Drehzahlwert $n_0$ ansteht, daß der Summierverstärker (11c) durch Rückführdioden (11k, 11l) als Idealgleichrichter geschaltet ist und daß dem Summierverstärker (11c) ein Widerstand (11h) nachgeschaltet ist, der über eine erste Diode (11m) mit dem Betrag des Drehzahl-Istwers $|n_{ist}|$ und über einen Impedanzwandler (11i) mit dem Ausgang des Kennliniengebers verbunden ist.

**Claims**

1. A method of increasing the maximum rate of rotation of a synchronous machine having a constant excitation field strength with a preceding static converter which is assigned a theoretical value of active current whose phase position is regulated in dependence upon the position of the rotor of the synchronous machine and whose amplitude is regulated in dependence upon a theoretical value rate of rotation, characterised in that in the case of actual rates of rotation of $|n_{ist}| > n_0$, the amplitude ($I_{Wsoll}$) of the active current theoretical value ($\vec{I}_{Wsoll}$) is limited to a value inversely proportional to the factor $|n_{ist}|/n_0$, and to the active current theoretical value ($\vec{I}_{Wsoll}$) there is added a reactive current theoretical value ($\vec{I}_{Bsoll}$) whose amplitude is proportional to $(1 - n_0/|n_{ist}|)$, where $n_0$ is a predetermined value of the rate of rotation at which the sum of the field spider voltage (E) of the synchronous machine and of the voltage drop in the stator winding is at the maximum equal to the maximum possible output voltage ($U_{Klmax}$) of the static converter (6).

2. A method as claimed in Claim 1, characterised in that the rate of rotation value $n_0$ is proportional to the mains voltage ($U_N$) of the supply network which feeds the static converter (6).

3. A circuit arrangement for the implementation of a method as claimed in Claim 1 or 2, with a rate of rotation regulator (1) supplied with the deviation of the actual rate of rotation of the synchronous machine (7) from the theoretical rate of rotation, and whose output is connected via a first coefficient multiplier (2) to a first vector rotator (3) whose control inputs are connected to a rotor position sensor (8), where the active current theoretical value occurs at the output of the first vector rotator, characterised in that the output of the rate of rotation regulator (1) is connected to a first limiter (10) which limits the output signal of the rate of rotation regulator (1) to a value inversely proportional to the factor $|n_{ist}|/n_0$, and that the rate of rotation actual value $|n_{ist}|$ is fed to a first characteristic sensor (11) which thus forms a value $I_B^*$ which at rate of rotation actual values of $|n_{ist}| < n_0$ is equal to zero and at rate of rotation actual values of $|n_{ist}| > n_0$ is proportional to $(1 - n_0/|n_{ist}|)$, that the output of the first characteristic sensor (11) is connected via a second coefficient multiplier (12) to a second vector rotator (13) whose control inputs are connected to the rotor position sensor (8) and whose output signal is rotated by 90° relative to the rotor position signal, and that the assigned outputs of the two rotators (3, 13) are each connected to an adder (14, 15) at whose output the theoretical current value ($I_{soll}$) occurs.

4. A circuit arrangement as claimed in Claim 3, characterised in that the control input of the first limiter (10) is connected to the output of a second characteristic sensor (17) at whose input the amount of the rate of rotation actual value $|n_{ist}|$ occurs, where at rates of rotation actual values of $|n_{ist}| < 0$ the second characteristic sensor (17) emits a constant output signal, and at rate of rotation actual values of $|n_{ist}| > n_0$ it emits an output signal inversely proportional to the factor $|n_i st|/n_0$.

5. A circuit arrangement as claimed in Claim 4, characterised in that the second characteristic sensor (17) consists of a first summing amplifier (17a) at whose inverting input the amount of the rate of rotation actual value $|n_{ist}|$ occurs and at whose non-inverting input the rate of rotation value $n_0$ occurs, that the first summing amplifier (17A) is connected as an ideal rectifier by means of feedback diodes (17g, 17f), that the output of the first summing amplifier (17a) is connected via a resistor (17h) to an input of a second summing amplifier (17k), and that the maximum value for the active current theoretical value ($I_{Wsoll}$) occurs at the same input of the second summing amplifier (17k).

6. A circuit arrangement as claimed in Claim 4 or 5, characterised in that the limiter (10) contains two oppositely poled diodes (10a, 10b ; 10c, 10d) connected to one another, whose connection point is connected via a resistor (10f) to the output of the rate of rotation regulator (1) and whose second terminal is connected directly or via an inverter (10e) to the output of the second characteristic sensor (17).

7. A circuit arrangement as claimed in one of Claims 3 to 6, characterised in that the first characteristic sensor contains a summing amplifier (11c) at whose non-inverting input the amount of the rate of rotation actual value $|n_{ist}|$ occurs and at whose inverting input the rate of rotation value $n_0$ occurs, that the summing amplifier (11c) is connected as an ideal rectifier by means of feedback diodes (11k, 11l), and that the output of the summing amplifier (11c) is connected to a resistor (11h) which is itself connected via a first diode (11m) to the amount of the rate of rotation actual value $|n_{ist}|$ and via an impedance converter (11i) to the output of the characteristic sensor.

## Revendications

1. Procédé pour accroître la vitesse de rotation maximale d'une machine synchrone avec une intensité constante du champ d'excitation, au moyen d'un convertisseur de courant branché en amont, pour lequel est prédéterminée une valeur de consigne du courant actif, dont la position de phase est réglée en fonction de la position du rotor de la machine synchrone et dont l'amplitude est réglée en fonction de la valeur de consigne de la vitesse de rotation, caractérisé par le fait que dans le cas de vitesses de rotation réelles $|n_{ist}| > n_0$, l'amplitude ($I_{Wsoll}$) de la valeur de consigne du courant actif ($\vec{I}_{Wsoll}$) est limitée à une valeur inversement proportionnelle au facteur $|n_{ist}|/n_0$ et que la valeur de la consigne du courant actif ($\vec{I}_{Wsoll}$) est ajoutée à une valeur de consigne du courant réactif ($\vec{I}_{Bsoll}$) déphasée de $+90°$ par rapport à la valeur de consigne du courant actif et dont l'amplitude est proportionnelle à $(1 - n_0/|n_{ist}|)$, $n_0$ étant une valeur prédéterminée de la vitesse de rotation, pour laquelle la somme de la tension (E) de la roue polaire de la machine synchrone et de la chute de tension dans l'enroulement statorique est égale au maximum à la tension de sortie maximale possible ($U_{Klmax}$) du convertisseur de courant (6).

2. Procédé suivant la revendication 1, caractérisé par le fait que la valeur $n_0$ de la vitesse de rotation est proportionnelle à la tension ($U_N$) du réseau d'alimentation alimentant le convertisseur de courant (6).

3. Montage pour la mise en œuvre du procédé suivant la revendication 1 ou 2, comportant un régulateur (1) de la vitesse de rotation, auquel est envoyé l'écart entre la vitesse de rotation réelle de la machine (57) et la vitesse de rotation de consigne et en aval duquel est branché, par l'intermédiaire d'un premier multiplicateur à coefficient (2), un dispositif de rotation vectorielle (3) dont les entrées de commande sont reliées à un transmetteur (8) de la position du rotor, et dans lequel la valeur de consigne du courant actif apparaît à la sortie du premier dispositif de rotation vectorielle, caractérisé par le fait qu'en aval du régulateur (1) de la vitesse de rotation se trouve branché un premier limiteur (10) qui limite le signal de sortie du régulateur (1) de la vitesse de rotation à une valeur inversement proportionnelle au facteur $|n_{ist}|/n_0$, et que la valeur réelle $|n_{ist}|$ de la vitesse de rotation est envoyée à un premier générateur de courbes caractéristiques (11) qui forme, à partir de là, une grandeur $I_B^*$, qui, pour des valeurs réelles de la vitesse de rotation $|n_{ist}| < n_0$, est nulle et qui, dans le cas de valeurs réelles de la vitesse de rotation $|n_{ist}|/ > n_0$, est proportionnelle à $(1 - n_0/|n_{ist}|)$, que la sortie du premier générateur de courbes caractéristiques (11) est reliée par l'intermédiaire d'un second multiplicateur à coefficient (12) à un second dispositif de rotation vectorielle (13), dont les entrées de commande sont reliées au transmetteur (8) de la position du rotor et dont le signal de sortie est pivoté de 90° par rapport au signal de la position du rotor, et que les sorties associées des deux dispositifs de rotation vectorielle (3, 13) sont reliées à des circuits additionneurs respectifs (14, 15), à la sortie desquels est présente la valeur de consigne du courant ($I_{soll}$).

4. Montage suivant la revendication 3, caractérisé par le fait que l'entrée de commande du premier limiteur (10) est reliée à la sortie d'un second générateur de courbes caractéristiques (17), à l'entrée duquel est présente la valeur réelle de la vitesse de rotation $|n_{ist}|$, le second générateur de courbes caractéristiques (17) délivrant, pour des valeurs réelles de la vitesse de rotation $|n_{ist}| > n_0$, un signal de sortie constant et, pour des valeurs réelles de la vitesse de rotation $|n_{ist}| > n_0$, un signal de sortie inversement proportionnel au facteur $|n_{ist}|/n_0$.

5. Montage suivant la revendication 4, caractérisé par le fait que le second générateur de courbes caractéristiques (17) est constitué par un premier amplificateur de sommation (17a), à l'entrée inverseuse duquel est appliquée la valeur réelle de la vitesse de rotation $|n_{ist}|$ et à l'entrée non inverseuse duquel est appliquée la valeur $n_0$ de la vitesse de rotation, que le premier amplificateur de sommation (17a) est branché, au moyen de diodes de réaction (17g, 17a) sous la forme d'un convertisseur idéal, que la sortie du premier amplificateur de sommation (17a) est reliée par l'intermédiaire d'une résistance (17h) à une entrée d'un second amplificateur de sommation (17k) et que la valeur maximale de la valeur de consigne du courant actif ($I_{Wsoll}$) est appliquée à cette même entrée du second amplificateur de sommation (17k).

6. Montage suivant la revendication 4, ou 5, caractérisé par le fait que le limiteur (10) contient deux diodes (10a, 10b ; 10c, 10d) polarisées en des sens opposés et reliées entre elles et dont le point de jonction est raccordé par l'intermédiaire d'une résistance (10f) à la sortie du générateur (1) de la vitesse de rotation et dont la seconde borne est reliée directement ou par l'intermédiaire d'un inverseur (10e) à la sortie du second générateur de courbes caractéristiques (17).

7. Montage suivant l'une des revendications 3 à 6, caractérisé par le fait que le premier générateur de courbes caractéristiques contient un amplificateur de sommation (11c), à l'entrée non inverseuse duquel est appliquée la valeur réelle de la vitesse de rotation $|n_{ist}|$ et à l'entrée inverseuse duquel est appliquée la valeur $n_0$ de la vitesse de rotation, que l'amplificateur de sommation (11c) est branché, au moyen de diodes de réaction (11k, 11l), sous la forme d'un convertisseur idéal, et qu'en aval de l'amplificateur de sommation (11c) est branchée une résistance (11h) qui reçoit la valeur réelle de la vitesse de rotation $|n_{ist}|$ par l'intermédiaire d'une première diode (11m) et est reliée par l'intermédiaire d'un transformateur d'impédance (11i) à la sortie du générateur de courbes caractéristiques.

FIG 1

FIG 2

FIG 3

FIG 4

FIG 5

FIG 6

FIG 7

FIG 8